# EUROPEAN PATENT SPECIFICATION

(11) **EP 2 878 826 B1**
(45) Date of publication and mention of the grant of the patent: **20.03.2019**
(21) Application number: 14195375.2
(22) Date of filing: 28.11.2014
(51) Int. Cl.: F04D 13/08, F04D 29/58, F25B 41/00, H02K 9/06, H02K 9/14

(54) **Pump with air cooled motor**
Pumpe mit luftgekühltem Motor
Pompe avec moteur refroidi par air

(30) Priority: 28.11.2013 IT UD20130159
(43) Date of publication of application: 03.06.2015
(73) Proprietor: Bergamo, Stefano, 33170 Pordenone (IT)
(72) Inventor: Bergamo, Stefano, 33170 Pordenone (IT)
(74) Representative: Petraz, Gilberto Luigi

(56) References cited:
- EP-A1- 0 784 369
- WO-A2-2007/143719

## Description

### FIELD OF THE INVENTION

The present invention concerns a movement device for a cooling liquid, for example, but not restrictively, of the type with a vertical, semi-submerged drive axle, also known as immersion or semi-immersion pump, and which can be used for example to transport the cooling liquid from a containing tank to the point of final use.

In particular, but not exclusively, the device according to the present invention can be applied in refrigerators for the catering industry, such as apparatuses for dispensing drinks, for domestic use or for the food industry, or in machine tools, or again for stirring the cooling liquid in the containing tank.

### BACKGROUND OF THE INVENTION

It is known to use a movement device to transport a cooling liquid, through a delivery circuit, from a suitable containing tank toward a user device to be cooled, such as for example a machine tool or a refrigerator for dispensing drinks.

Usually, the movement device used in the state of the art is the type with a vertical drive axle, semi-submerged in the cooling liquid and is installed on an upper wall of the containing tank.

The known movement device is usually provided with a drive assembly, a cooling unit and a hydraulic pumping member, supported by a support element, called shank, provided on the lower side of the drive assembly.

The drive assembly generally comprises an electric motor mounted on a support structure. The support structure also functions as at least partial protection for the motor and as electrical protection and can comprise at its lower part an attachment base to attach the whole movement device to the containing tank. The drive assembly comprises an internal cylinder, called rotor, into which a drive shaft is inserted, along a common axis of alignment, to make the hydraulic pumping members rotate. The free rotation of the drive shaft is guaranteed by two bearings, upper and lower, positioned on opposite sides of the rotor, or equivalent components such as bushings or bronzes.

In particular, movement devices are known in which the cooling unit of the drive assembly is mounted on the upper side of the drive assembly and comprises a cooling pressure fan attached on one end of the drive shaft which is above the drive assembly.

The fan thrusts and conveys the air taken from the environment from above toward the drive assembly below, cooling it.

Usually, in this configuration, due to requirements of bulk, the lower bearing is situated a little above the attachment base.

One disadvantage of these movement devices is that any raising of the level of the cooling liquid contained in the containing tank can cause the cooling liquid itself, or nebulized particles thereof, to infiltrate along the shank and/or along the drive shaft, arriving as far as the drive assembly and damaging it. Indeed, it is well known in this field that the main cause of malfunctions and obligatory and premature replacements of known movement devices in the applications in question - that is, machine tools, conditioning plants, or for example refrigerators for dispensing drinks - is flooding, or even only the rust that forms in the bearings of the motor.

The lower bearing, located in the lower part of the drive assembly, is particularly critical, because it is subject to the deposit of nebulized liquid or liquid itself that, entering into direct contact with the bearing, can cause the grease to melt. Since it is the grease that guarantees the normal working life of the bearing, this situation eventually leads to seizing up.

It is also known that this problem can be solved by raising the seating of the lower bearing with respect to the attachment base, but this entails increasing the bulk of the drive assembly, which prevents installation in limited spaces.

A movement device is also known in which the cooling unit of the drive assembly is disposed in an opposite position with respect to that described in the state of the art as above, that is, intermediate between the drive assembly and the shank, in order to distance the drive assembly from the cooling liquid below during normal use. The drive assembly is also provided with a drive body, comprising at least a rotor, isolated from the outside by a completely closed containing compartment of the motor which protects it from the accidental entry of water, dirt or other.

In this known device, the ventilation unit performs the cooling, taking air laterally or from the lower part of the drive assembly, in this case directly from the containing tank below, and thrusting it upward toward the drive body.

One possible disadvantage of said ventilation device is that making a completely closed and isolated motor can entail very high costs, also in consideration of the need to provide heat exchange surfaces, typically fins, on the outside, for indirect cooling. Furthermore, another possible disadvantage concerns the macro-turbulence of the stream of cooling air which is created due to the phenomenon of thrust suffered by the air due to the pressure fan; macro-turbulence can also have a negative influence on the heat exchange performance, considerably reducing the efficiency of the cooling.

To eliminate macro-turbulence, channels can be provided, for example made by the fins, inside or outside the support structure, which divert and force the path of the air.

A possible disadvantage of this system is that the presence of the channels entails a bigger support structure.

Document US-A-3,407,739 describes a pump with a motor disposed in a housing that is open at the bottom, a centrifugal suction fan with a straight blade, disposed under the motor and configured to determine a centrifugal or tangential exit of the air, through lateral apertures that face directly toward the fan. However, this configuration entails a risk that dust, extraneous objects, dirt, splashes of liquid and other may enter, through the lateral apertures through which the air exits, inside the housing of the fan and hence also into the housing of the drive body, with the negative consequences that this entails. Therefore, this known solution does not guarantee safety and cleanliness of the motor and the drive member, with a possible consequent reduction in the working life of the pump, need for repairs, maintenance and/or replacements and hence increase in costs. Document US-A-2011/0074235 also describes an electric motor, disposed in a closed housing, air cooled with a centrifugal fan, configured to determine a centrifugal or tangential exit of the air. Furthermore, document EP-A-0.784.369 also describes an electric motor, disposed in an open housing, cooled by means of a centrifugal fan of this type. This document can also entail a risk that dust, extraneous objects, dirt, splashes of liquid and other may enter, through the lateral apertures through which the air exits. Document WO-A-2007/143719 on the contrary describes a motor that is cooled with an axial suction fan.

There is therefore a need to perfect the movement of a cooling liquid that can overcome at least one of the disadvantages of the state of the art.

In particular, one purpose of the present invention is to obtain a movement device for a cooling liquid which is particularly economical, compact and efficient in cooling and at the same time is protected from flooding of the internal members of the drive assembly due to the accidental increase in the level of the cooling liquid and/or humidity, or particles of cooling liquid, arriving from the containing tank below.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, the present invention concerns a movement device for a cooling liquid of the type with a vertical semi-submerged drive axle.

The movement device according to the present invention comprises, disposed along a common axis:
- a drive assembly, provided with at least a drive body and a support structure of the drive body;
- a movement member for moving the cooling liquid, drivable by the drive assembly;
- a cooling unit configured to cool the drive assembly and disposed along the intermediate axis between the drive assembly and the movement member.

The support structure comprises one or more upper and/or lateral air inlet apertures made in an upper portion of the support structure and one or more lateral or lower air outlet apertures, made in a lower portion of the support structure, close to the cooling unit, to define overall one or more passageways to extract cooling air through the support structure and in direct contact with the drive body.

Moreover, the cooling unit comprises a suction device, disposed at said air outlet apertures, configured to cause the suction of air through the drive body along the one or more passageways from the one or more air inlet apertures toward the air outlet apertures.

Using a suction device configured to create a depression, and the centrifugal or axial extraction of the air, allows to make the streams of air less turbulent than in known systems, which use ventilation devices, or devices to thrust the air in the direction of the drive body.

With the suction device of the present invention, the air entering from the upper and/or lateral apertures located in the upper portion of the drive assembly passes through the drive body, striking all its external surfaces, for example the surfaces of the stator and those of the coils that can make up the drive body. In particular, using a suction fan provided in the suction device allows the centrifugal or axial extraction of the air around the drive body. The fan can be configured with a geometry such as to combine axial suction, which creates the necessary depression to draw the air from the upper part of the motor, forcing it toward the lower part, with the centrifugal thrust created by the fan that expels the air.

The suction device of the present invention, creating a depression and extracting the air from the top downward, makes the streams of air less turbulent, that is, constant and uniform, obtaining a more uniform cooling of the drive assembly, in that it prevents the heated air from recirculating, and consequently the cooling is more continuous and effective.

With the present invention, the ambient air meets the drive body immediately, because the suction device creates a depression, taking in the air from the top downward, and the streams of air are extracted, finding their natural path without channelization, and eliminating the macro-turbulence without artifices. In this way, production costs are lower and the bulk of the support structure of the drive assembly is reduced.

Providing the ventilation unit in a position below the drive assembly also allows to reduce the overall bulk of the movement device, which can thus be inserted into particularly limited spaces. Providing the ventilation unit in a lower position also allows to distance the drive assembly from the cooling liquid contained in the containing tank, creating an interspace that also functions as a heat shear chamber, since the humidity could rise up through the drive shaft that is dried by the ventilation, preventing exchange with the bearings.

Furthermore, in the event of a rise in the level of the liquid, the fan, pressing the air in a direction opposite the motor, that is, toward the tank, keeps the level of the liquid low, thanks to the pressure exerted by the fan. In the specific case of the present invention, there is a containing flange interposed between the tank and the drive body. In this case, possible infiltrations of liquid, splashes or damp are kept in the lower part of the whole unit, and are then expelled centrifugally through the escape routes.

According to the invention, the cooling unit comprises a lower containing flange which contains the suction device. The containing flange is provided with a peripheral edge that covers, in a direction radial to the axis, the air outlet apertures of the support structure. The containing flange is provided with an internal seating, facing toward the one or more air outlet apertures, and the suction device is positioned in the internal seating. The suction device comprises a rotating suction member configured to direct the air taken in diagonally downward toward the containing flange and toward the air outlet apertures.

In possible implementations, one or more air inlet apertures are disposed in a position distanced from the drive body, raised in a direction opposite the position of the cooling unit with respect to the drive body, allowing the air taken in by the cooling device to strike the drive body itself completely.

During use, the cooling unit thus made allows to obtain a stream of air inside the support structure that passes through the drive body in a direction substantially from the top downward. A stream of air that develops from the top downward allows to contrast the streams of damp air arriving from the cooling liquid below, disposed in a position underneath, typically contained in a containing tank. In fact, the streams of damp air arriving from the cooling liquid are the biggest causes of deposits of condensation on the drive body and the bearings, which is one of the biggest causes of malfunctions in devices for moving cooling liquid. In this way, moreover, it is not necessary to isolate the drive body, thus reducing the overall costs of making the movement device.

In some forms of embodiment, one or more of the air inlet apertures are shaped with an elongated shape, thus obtaining narrower passages for the incoming air. It is also possible to exploit a Venturi effect, to take in incoming air from other air inlet apertures, for example lateral, with a bigger section.

In this specific case, an increase in the speed of the air entering is particularly advantageous, since it leads to an increased dissipation of heat on the drive body, and consequently to a substantial increase in cooling with respect to other known forms of embodiment.

The use of the containing flange, together with the stream of air from the top downward, reduces the probability of condensation depositing on the drive body. Furthermore, since the containing flange functions as both a lower and lateral barrier, it prevents the streams of air heated by heat exchange with the drive body from coming into contact with the cooling liquid below.

According to some forms of embodiment, the rotating suction member includes a suction fan provided with twisted blades with a helical development.

According to some forms of embodiment, the suction fan comprises a central hub, from which the twisted blades with a helical development depart. Each twisted blade with a helical development comprises a shank connecting to the central hub and a twisted blade body that has radially a twisted profile with a helical development on the outside.

According to some forms of embodiment, each twisted blade with a helical development is provided with an air inlet edge that develops radially from the hub and is part of the shank, and also with an air outlet edge with a inclined cut shape that is part of the blade body and is configured to determine a diversion of the stream of air at exit, directing it diagonally downward toward the containing flange and toward the air outlet apertures.

According to some forms of embodiment, the air outlet edge with an inclined cut shape is formed by a segment with an essentially circumferential development and by an inclined cut segment.

According to other forms of embodiment, the rotating suction member includes a Coanda effect fan.

According to the invention, when seen in a direction radial to the axis, the containing flange overlaps the lower portion of the support structure, defining an exit channel with an annular shape that connects the air outlet apertures to external apertures.

In possible implementations, the exit channel is in the shape of a siphon.

According to the invention, the exit channel has an axial-symmetrical development around the axis and develops mainly in a direction transverse to a base lying plane of the containing flange, in particular a vertical direction, parallel to the axis Y.

According to some forms of embodiment, the suction device is configured to convey the air exiting from the one or more air outlet apertures in a direction parallel to said axis and/or transversely with respect to said axis, through the exit channel.

According to some forms of embodiment, the support structure is provided with stiffening and support elements which support the drive body. The stiffening and support elements are disposed to achieve overall a radial or grid shape or reticular structure which at least partly delimits the one or more lower apertures.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a perspective view of some forms of embodiment of a movement device for cooling liquid according to some forms of embodiment described here;
- fig. 2 is a section from II to II of fig. 1;
- fig. 2a is an enlarged detail of fig. 2;
- fig. 3 is a perspective view of some forms of embodiment of a movement device for cooling liquid according to some forms of embodiment described here;
- fig. 4 is a section from IV to IV of fig. 3;
- figs. 5, 6 and 7 are views of a part of the movement device according to some forms of embodiment described here;
- fig. 8 is a schematic representation of a part of the movement device according to other forms of embodiment described here.

To facilitate comprehension, the same reference numbers have been used, where possible, to identify identical common elements in the drawings.

### DETAILED DESCRIPTION OF SOME FORMS OF EMBODIMENT

We shall now refer in detail to the various forms of embodiment of the present invention, of which one or more examples are shown in the attached drawings. Each example is supplied by way of illustration of the invention and shall not be understood as a limitation thereof.

With reference to the attached drawings, forms of embodiment are described of a movement device 10 for a cooling liquid, such as for example water, water-glycol, water-oil emulsion or other, for example with a vertical drive axis, also known as an immersion or semi-immersion pump, or with a horizontal drive axle, for example usable as a circulator for the cooling liquid, which does not provide immersion or semi-immersion in liquid.

The movement device 10 can be used, for example but not restrictively, to transport the cooling liquid typically contained in a containing tank (not shown) to a user device (also not shown), such as by way of example a plant for dispensing drinks, for example for dispensing beer in bars, or a machine tool.

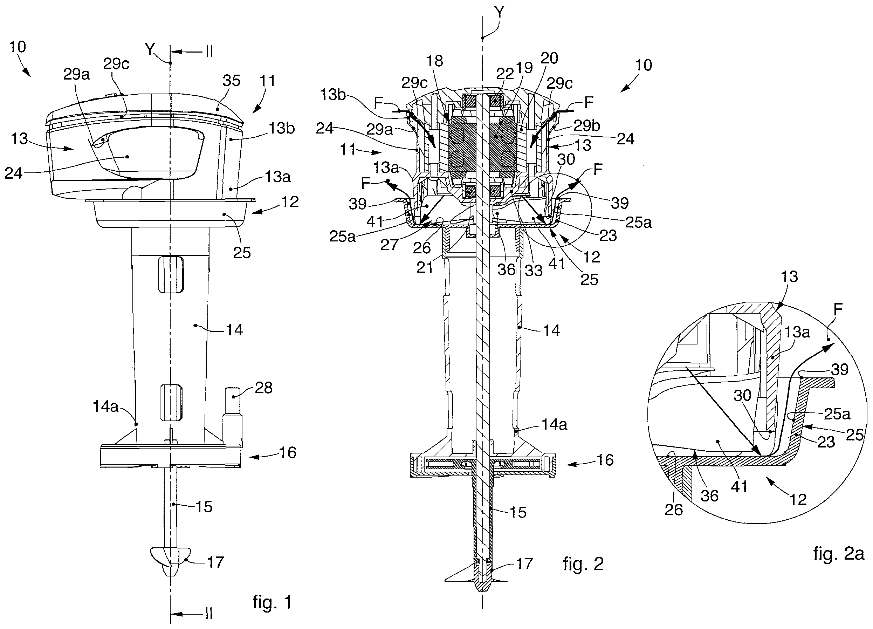

In forms of embodiment described using fig. 1, the movement device 10 has a development along an axis Y. Axis Y, for example, in normal use can be a vertical axis, as in the case of an immersion or semi-immersion pump, or a horizontal axis, for example in the case of a circulator for liquids which does not provide immersion or semi-immersion in the liquid.

The movement device 10 comprises a drive assembly 11 provided with a drive body 18 and a support structure 13, configured to at least support the drive body 18 and also, possibly, to contain inside it the drive body 18. As will be explained in more detail hereafter, the support structure 13 is open at the lower part and also at the upper part, that is, it has apertures in a lower portion 13a and an upper portion 13b.

The movement device 10 can also comprise a movement member 16 for moving the cooling liquid, drivable by the drive assembly 11.

The movement member 16 can be, or include, a pumping/suction hydraulic member, such as a turbine or hydraulic rotor, or a plurality of hydraulic stages of pumping/suction, or a simple propeller or similar member, for stirring the liquid. In any case, the propeller can be present in the forms of embodiment where the movement member 16 can be a pumping hydraulic member, as described with reference to the attached drawings.

The movement device 10 also comprises a cooling unit 12 configured to cool the drive assembly 11 and disposed along the axis Y, intermediate between the drive assembly 11 and the movement member 16.

The support structure 13 comprises one or more upper and/or lateral air inlet apertures 29a, 29b, 29c made in an upper portion 13b of the support structure 13.

Moreover, in possible example forms, the support structure 13 comprises, in a lower portion 13a, one or more lateral or lower air outlet apertures 30, made close to the cooling unit 12, to define overall one or more passageways of cooling air through the support structure 13 and in direct contact with the drive body 18.

Furthermore, the cooling unit 12 comprises a suction device 27, disposed at the air outlet apertures 30 and configured to cause the suction, depression or extraction of air through the drive body 18 along the one or more passageways from the one or more air inlet apertures 29a, 29b, 29c toward the one or more air outlet apertures 30. Consequently, the drive assembly 11 is protected from unwanted raising of the level of the liquid, since the cooling unit 12, and in particular the suction device 27, are interposed with respect to the liquid below, consequently raising and distancing the drive assembly 11. Moreover, the movement device 10 thus configured is more compact.

Furthermore, the drive body 18 is cooled directly by air taken in and the depression connected to the suction from the top downward prevents the formation of macro-turbulence and improves cooling.

The cooling unit 12 comprises a lower containing flange 25 which contains the suction device 27. The containing flange 25 is provided with a peripheral edge 23 (figs. 2, 2a) that covers, in a direction radial to the axis Y, the air outlet apertures 30 of the support structure 13. The containing flange 25 is provided with an internal seating 26 or chamber, facing toward the one or more air outlet apertures 30. The suction device 27 is positioned in the internal seating 26.

The suction device 27 includes a rotating suction member or fan 36 configured to direct the air taken in diagonally downward toward the containing flange 25 and toward the air outlet apertures 30.

The drive assembly 11 is provided with a drive shaft 15, which has a development along the axis Y. The drive body 18 is configured to make the drive shaft 15 rotate.

The movement member 16 is driven by the drive assembly 11, by means of the rotation of the drive shaft 15.

In some forms of embodiment, given by way of non-restrictive example, the movement member 16 can be, or include, at least a hydraulic pumping member, and can also possibly comprise at least a stirring element, provided on the drive shaft 15, in this specific case a propeller or similar rotating element with blades 17, which can be disposed at the lower part and which, rotating together with the drive shaft 15, stirs the cooling liquid below, for example water, slowing the formation of ice and/or promoting the erosion of the ice, for example inside the containing tank.

In some forms of embodiment, given by way of non-restrictive example, the movement member 16 can comprise one or more hydraulic connectors 28, connectable for example to one or more delivery pipes (not shown) which allows to transport the cooling liquid to the user device.

In some forms of embodiment, given by way of non-restrictive example, the movement device 10 can comprise an oblong element, also called shank 14, to support the movement member 16.

In some forms of embodiment, given by way of non-restrictive example, the movement member 16 is positioned at a lower end 14a of the shank 14. In particular, during use the shank 14 is at least partly immersed in the cooling liquid to allow the consequent immersion of the movement member 16.

In some forms of embodiment, given by way of non-restrictive example, the shank 14 has a development along the axis Y and the drive shaft 15 is at least partly inserted inside the shank 14.

In possible implementations, the shank 14 can have a cylindrical shape for example, or truncated cone or other oblong shape suitable to partly contain the drive shaft 15.

In some forms of embodiment, the drive assembly 11, the cooling unit 12 and the oblong element 14 are disposed along the axis Y.

This solution with the shank 14 can be used for example in the case of a vertical immersion or semi-immersion pump. On the contrary, in the case of a liquid circulator with a horizontal axis, the shank 14 may not be provided and the movement member 16 can be mounted directly in correspondence with the cooling unit 12.

As we said, the cooling unit 12 can be disposed in an intermediate position between the support structure 13 and the movement member 16, for example in particular the shank 14 when provided and, in particular, it can be disposed in correspondence with the lower portion 13a (fig. 1) of the support structure 13.

In some forms of embodiment, in correspondence with an upper portion 13b of the support structure 13, the support structure 13 can comprise a lid 35, which for example could be fixed or removable. The lid 35 of the removable type can for example facilitate maintenance operations inside the support structure 13 by qualified personnel.

In forms of embodiment described using fig. 2, the drive body 18 can comprise a rotor 19, inside which the drive shaft 15 can be stably connected, and a stator 20 configured to make the rotor 19 rotate.

In some forms of embodiment, the free rotation of the drive shaft 15 is allowed by bearings, in this case two bearings, lower 21 and upper 22, or other similar elements, positioned on opposite sides of the rotor 19 of the drive body 18.

In some forms of embodiment, the support structure 13 can provide one or more air outlet apertures 30, for example lower and/or lateral apertures, or a single, bigger air outlet aperture, which leave the lower part of the drive body 18 substantially open, completely, to allow the air to be extracted.

In some forms of embodiment, the suction device 27 is disposed typically at the air outlet aperture 30 or air outlet apertures 30.

In some forms of embodiment, the suction device 27 is disposed near the air outlet aperture 30 to allow the air to be taken in through the drive body 18.

In possible implementations, the suction device 27 is configured to take the air in axially from above and then direct it diagonally downward, toward the air outlet apertures 30, from where it can exit, for example in a direction parallel to the axis Y and/or transversely inclined with respect to the axis Y, in practice creating a depression that causes the movement of the mass of cooling air.

In the forms of embodiment described, the generation of a depression prevents the formation of macro-turbulence of the mass of cooling air in movement, unlike the pressure fans known in the state of the art which thrust the air; in this way the cooling performance is considerably improved.

In particular, all in all the speed and volume of air exiting from the one or more air outlet apertures 30 are substantially identical to the speed and volume of air entering the air inlet apertures 29a, 29b, 29c.

In forms of embodiment described with reference to figs. 1, 2 and 3, the support structure 13 is provided with said air inlet apertures 29a, 29b, 29c, for example a first lateral aperture 29a, a second lateral aperture 29b and a third peripheral aperture 29c, configured to allow the air to enter into the support structure 13.

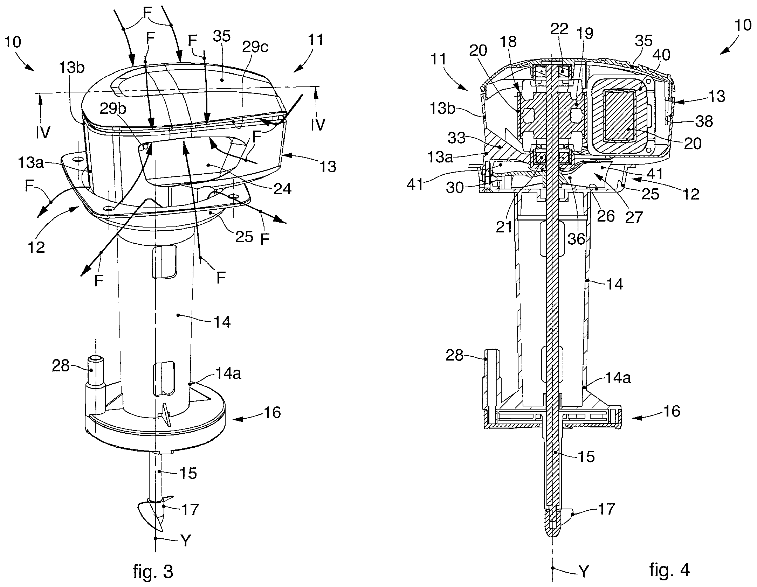

In figs. 2 and 3, in particular, the air taken in from the top downward by the suction device 27 is shown by the streams of air F.

In some forms of embodiment, the air inlet apertures 29a, 29b, 29c can be disposed in a position distanced from the drive body 18, raised in a direction opposite the position of the cooling unit 12 with respect to the drive body 18. In this way, the streams of air F, as they are taken in by the suction device 27, can hit the drive body 18 in its entirety. In particular, the air inlet apertures 29a, 29b, 29c are configured to determine a stream of air taken in which hits the lateral surface of the drive body 18 directly and to a large extent.

Furthermore, the streams of air F that hit the drive body 18 find a natural path without using channelizations, thus eliminating at the same time the need to make channels as in the state of the art.

In some forms of embodiment, the air inlet apertures 29a, 29b, 29c can be elongated in shape, to obtain a Venturi effect and thus improve the cooling of the drive body 18.

In some forms of embodiment, the first lateral aperture 29a and the second lateral aperture 29b can be disposed for example in opposite positions of the support structure 13, to obtain symmetrical streams of air F directed toward the drive body 18.

In some forms of embodiment, the lateral apertures 29a, 29b can be obtained by making one or more apertures or recesses as a lateral pocket 24, for example at least partly recessed inside the support structure 13.

The lateral apertures 29a, 29b can be for example adjacent to the one or more apertures or recesses made as a lateral pocket 24, for example made near the upper part of the apertures or recesses made as a lateral pocket 24, for example in correspondence with the upper portion 13b.

In some forms of embodiment, the apertures or recesses made as a lateral pocket 24 can be provided inclined with respect to the axis Y to facilitate the entrance of streams of air.

In some forms of embodiment, the peripheral aperture 29c can be shaped as a through aperture, for example made at 360° around the lateral surface of the support structure 13.

In other forms of embodiment, the peripheral aperture 29c can have a smaller extension on the perimeter of the support structure 13.

In some forms of embodiment, the peripheral aperture 29c can have a variable height around the axis Y, achieving a stream of air F that varies in different directions entering the support structure 13.

In some forms of embodiment, the peripheral aperture 29c can be made between the lid 35, fixed or removable, and the remaining part of the support structure 13.

In this way, by creating a depression from the top downward, the suction device 27 is able to take air from the air inlet apertures 29a, 29b, 29c, taking it in and conveying it through the drive body 18 and in this way dissipating the heat developed by the functioning of the drive body 18.

In other forms of embodiment, at least one air inlet aperture 29a, 29b, 29c can be provided on the upper surface of the lid 35, thus allowing for example a vertical entrance of air, parallel to the axis Y.

In other forms of embodiment, not shown, the air inlet apertures 29a, 29b, 29c can be disposed vertically and radially.

According to the invention, the cooling unit 12 comprises the containing flange 25, which can be disposed under the suction device 27. The containing flange 25 is configured to contain the suction device 27 and also to obtain a lateral and lower barrier for the support structure 13, in this way protecting the drive body 18 from humidity rising from below or laterally, or from dirt, particles or other unwanted objects. The containing flange 25 can also possibly function as a support for the drive assembly 11 above. In possible implementations, the containing flange 25 is directly coupled with the lower portion 13a of the support structure 13 and can have inside it the internal seating or chamber 26, in which the suction device 27 is positioned and contained, facing toward the air outlet aperture 30.

The containing flange 25 can typically be disposed in contact with an upper wall of the containing tank to support the whole movement device 10.

As we said, the containing flange 25 is in particular configured to prevent infiltrations of cooling liquid or damp air, arriving from the oblong element 14 when the movement device 10 is in use.

In this configuration, the streams of air F taken in by the suction device from the top downward can exit from external apertures 39 defined or made between the containing flange 25 and the lower portion 13a of the support structure 13.

According to the invention, the lower containing flange 25 contains the suction device 27 and is provided with the peripheral edge 23 that covers, in a direction radial to the axis Y, the air outlet apertures 30 of the support structure 13. More particularly, when seen in a direction radial to the axis Y, the containing flange 25 overlaps the lower portion 13a of the support structure 13, protecting the air outlet apertures 30, since it prevents unwanted infiltrations of liquid, splashes or the entry of unwanted objects, particles, dust, dirt toward the internal seating 26 and toward the drive body 18. In this way, the containing flange 25 thus defines an exit channel 25a (figs. 2, 2a) of an annular shape that connects the air outlet apertures 30 to the external apertures 39, so that, once the air has passed through the air outlet apertures 30, it flows along the exit channel 25a and exits through the external apertures 39. In practice, therefore, the overlapping of the containing flange 25, when seen in a direction radial to the axis Y, over the lower portion 13a defines a siphon shape of the exit channel 25a, that is, with an elbow-shaped bent segment in correspondence with the one or more air outlet apertures 30 and a subsequent segment rising to the external apertures 39, which essentially prevents the direct lateral entrance of damp, liquid, splashes, particles, dirt or other unwanted objects.

The exit channel 25a has an axial-symmetrical development around the axis Y and develops mainly in a direction transverse to a base lying plane of the containing flange 25, in particular a vertical direction, that is, parallel to the axis Y.

In a coordinated manner, therefore, the suction device 27 can be configured to convey the air exiting from the one or more air outlet apertures 30 in a direction parallel to the axis Y and/or transversely with respect to said axis Y, through the exit channel 25a.

This solution is advantageous because on the one hand it protects the drive body 18 and on the other hand it allows in any case an efficient outlet of the cooling air along the exit path defined by the air outlet apertures 30, the exit channel 25a and the external apertures 39. In fact, thanks to the configuration of the suction fan 36 described above in the various forms of embodiment, the air directed diagonally downward can reach the air outlet apertures 30 and have enough energy to continue along the exit channel 25a, and from here to exit by means of the external apertures 39.

In forms of embodiment described using fig. 4, the support structure 13 can comprise inside a technical compartment 38 inside which part of the electronic and mechanical components needed for the functioning of the movement device 10 can be housed; in this case the technical compartment 38 is mainly occupied by electric coils 40 of the stator 20.

In forms of embodiment described using figs. 2 and 4, the support structure 13 can be provided with stiffening and support elements 33 which support the drive body 18.

The stiffening and support elements 33 allow to support the drive body 18 and to strengthen the support structure 13, in particular against lateral flexions, making it stably positionable in contact with the cooling unit 12.

In possible implementations, the stiffening and support elements 33 can be disposed to achieve a radial (figs. 2 and 4) or grid shape or similar reticular structure which advantageously defines the lower apertures 30.

These configurations, radial, grid-like or reticular in general, can develop for example from the lateral walls toward the center of the support structure 13, where a support block 34 may be present on which for example the drive body 18 rests, and which can have a hole 37 for the passage of the drive shaft 15. The stiffening and support elements 33 can for example also reduce the mechanical vibrations transmitted by the drive body 18 to the support structure 13, when the movement device 10 is in use. Consequently, the stiffening and support elements 33, connecting the lateral walls of the support structure 13 to each other and strengthening them, prevent inter-flexions and collapse of the whole drive assembly 11.

The suction device 27 comprises the rotating suction member or fan 36 (fig. 3), configured to direct the air diagonally downward toward the containing flange 25 and toward the air outlet apertures 30. In this way, even if the containing flange 25 laterally covers the air outlet apertures 30, to obtain the advantage of protecting the internal seating 26 and the drive body 18 as described above, the choice of a rotating suction member or fan 36 configured in this way allows in any case a suitable outlet for the air.

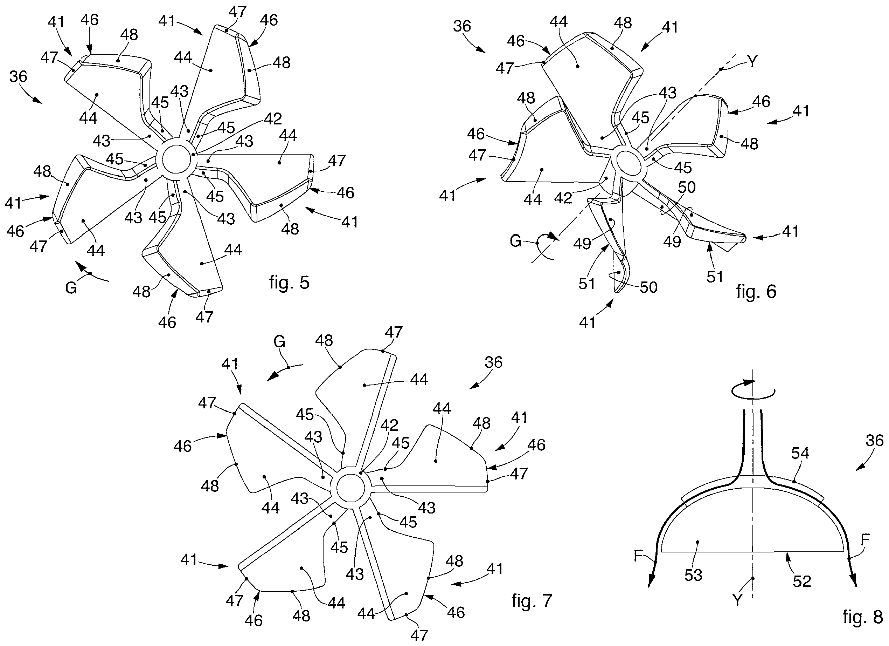

In possible example embodiments, the suction fan 36 can be provided with blades with a helical development 41 (see figs. 6-8 for example), or it can exploit the Coanda effect.

In particular, figs. 6, 7 and 8 are used to describe forms of embodiment, which can be combined with all the forms of embodiment described here, of a suction fan 36 with twisted blades having a helical development 41. The suction fan 36 can include a central hub 42, from which the twisted blades with a helical development 41 depart radially. For example, five or three or four or even more than five, for example six, seven or more twisted blades with a helical development can be provided. Each twisted blade with a helical development 41 can include a shank 43 connecting to the central hub 42 and a twisted blade body 44 that has radially a twisted profile 51 with a helical development on the outside. The blade body 44 is therefore bent or twisted forward with respect to the direction of rotation G of the twisted blade with a helical development 41 around the axis Y, for example by an angle comprised between 30° and 60°, for example about 45°. The twisted blade body 44 may have a wider shape than the shank 43, with a narrower section.

Each twisted blade with a helical development 41 has an extrados surface 49 and an intrados surface 50, the latter cooperating with the air taken in. Each twisted blade with a helical development 41 has an air inlet edge 45 that develops radially from the hub 42. The air inlet edge 45 is near the axis Y and determines the axial suction of the air. In particular the air inlet edge 45 can be part of the shank 43. Each twisted blade with a helical development 41 also has an air outlet edge 46 with an inclined cut shape, configured to determine a diversion of the stream of air at exit, directing it diagonally as described above. The air outlet edge 46 with an inclined cut shape can be part of the blade body 44. In particular, the air outlet edge 46 with an inclined cut shape can be formed by a segment with an essentially circumferential development 47 and by an inclined cut segment 48. The inclined cut segment 48 defines a segment for the early exit of the air compared with a non-cut blade. In this way, the blade body 44 is configured to reduce the part thrusting the air downward, thus promoting a radial exit, so that the result is a diagonally downward direction of the stream of air F. The rotating suction fan 36 is therefore configured to determine a suction of the stream of air F from the top downward which converges toward the center of the dominant part of the fan, and is then directed diagonally downward. The segment with the essentially circumferential development 47 is substantially conformed in a manner coordinated with an arc of a circle with its center in correspondence with the axis Y.

Thanks to the configuration described above of each twisted blade with a helical development 41, the air taken in axially in correspondence with the air inlet edge 45 is compressed and forced by the intrados surface 50 during rotation, directing it toward the outside of the twisted blade with a helical development 41, and thanks to the provision of the air exit edge 46 with the inclined cut shape, the air exits earlier in correspondence with the inclined cut segment 48, that is, before the normal exit of a non-cut blade, in a fluidodynamic condition such that the air speed components determine a desired diagonally downward direction thereof.

According to some forms of embodiment described here, it is also possible to accentuate to a greater or lesser degree the inclined cut shape of the air outlet edge 46, that is, to accentuate to a greater or lesser degree the angle of inclination of the inclined cut segment 48 with respect to a radial direction so as to diagonally divert the air to a greater or lesser extent toward the bottom of the containing flange and the air outlet apertures 30. Therefore, the result of the diagonally downward stream of air can be suitably calibrated by varying the angle of inclination of the inclined cut segment 48 and possibly the twisted profile 51.

In other forms of embodiment, not shown, the suction fan 36 can comprise blades with a vertical development.

In other forms of embodiment, which can be combined with all the forms of embodiment described here, the suction fan 36 can be a Coanda effect fan 52, comprising a shaped cup 53, and a blading 54, that is, a set of suction blades or bladelets. The shaped cup 53 is configured to determine a Coanda effect on the air taken in. The shaped cup 53 can be made to rotate, thus taking in the air thanks to the blading 54. Thanks to the configuration of the shaped cup 53, the air taken in is directed, due to the Coanda effect, diagonally downward toward the containing flange 25 and toward the air outlet apertures 30.

In possible implementations, the containing flange 25 can have an internal surface, for example the bottom of the internal seating 26 and/or the lateral walls of the peripheral edge 23, which is faceted or scaled, to reduce the noise of the air taken in and to create micro-vortexes to reduce the friction of the air arriving and to increase the efficiency of the heat exchange.

It is clear that modifications and/or additions of parts may be made to the movement device 10 as described heretofore, without departing from the field and scope of the present invention.

It is also clear that, although the present invention has been described with reference to some specific examples, a person of skill in the art shall certainly be able to achieve many other equivalent forms of movement device, having the characteristics as set forth in the claims and hence all coming within the field of protection defined thereby.

## Claims

1. Movement device for a cooling liquid, comprising, disposed along a common axis (Y):
- a drive assembly (11), provided with at least a drive body (18) and a support structure (13) of said drive body (18);
- a movement member (16) for moving said cooling liquid, drivable by said drive assembly (11);
- a cooling unit (12) configured to cool the drive assembly (11) and disposed along said axis (Y), intermediate between said drive assembly (11) and said movement member (16);
wherein said support structure (13) comprises one or more upper and/or lateral air inlet apertures (29a, 29b, 29c) made in an upper portion (13b) of the support structure (13) and one or more lateral or lower air outlet apertures (30), made in a lower portion (13a) of the support structure (13), close to the cooling unit (12), to define overall one or more passageways of cooling air through said support structure (13) and in direct contact with said drive body (18), wherein said cooling unit (12) comprises a suction device (27), disposed at said one or more air outlet apertures (30) and configured to cause the suction of air through said drive assembly (18) along said one or more passageways from said one or more air inlet apertures (29a, 29b, 29c) toward said one or more air outlet apertures (30), wherein said cooling unit (12) comprises a lower containing flange (25) which contains said suction device (27), said containing flange (25) being provided with a peripheral edge (23) that covers, in a direction radial to the axis (Y), said air outlet apertures (30) of said support structure (13), said containing flange (25) being provided with an internal seating (26), facing toward said one or more air outlet apertures (30), said suction device (27) being positioned in said internal seating (26) and wherein said suction device (27) comprises a rotating suction member (36) configured to direct the air taken in diagonally downward toward the containing flange (25) and toward the air outlet apertures (30);
wherein said containing flange (25) is configured to obtain a lateral and lower barrier for the support structure (13), protecting the drive assembly (18) from humidity rising from below or laterally; wherein, when seen in a direction radial to the axis (Y), said containing flange (25) overlaps the lower portion (13a) of the support structure (13), defining an exit channel (25a) of an annular shape that connects the air outlet apertures (30) to external apertures (39);
**characterised in that** said exit channel (25a) has an axial-symmetrical development around the axis (Y) and develops mainly in a direction transverse to a base lying plane of the containing flange (25), thus a vertical direction, parallel to the axis (Y).

2. Movement device as in claim 1, **characterized in that** said one or more air inlet apertures (29a, 29b, 29c) are provided in a position distanced from said drive body (18), raised in a direction opposite the position of the cooling unit (12) with respect to said drive body (18).

3. Movement device as in claim 1 or 2, **characterized in that** said one or more air inlet apertures (29a, 29b, 29c) are shaped with an elongated shape.

4. Movement device as in claim 1, 2 or 3, **characterized in that** said support structure (13) has laterally at least a lateral pocket aperture (24), configured for the entrance of the air inside the support structure (13) and made recessed in said support structure (13), at least one of said air inlet apertures (29a, 29b) being provided adjacent to said lateral pocket (24).

5. Movement device as in any of the claims from 1 to 4, **characterized in that** said rotating suction member includes a suction fan (36) provided with twisted blades with a helical development (41).

6. Movement device as in claim 5, **characterized in that** the suction fan (36) comprises a central hub (42), from which the twisted blades with a helical development (41) depart, each twisted blade with a helical development (41) comprising a shank (43) connecting to the central hub (42) and a twisted blade body (44) that has radially a twisted profile (51) with a helical development on the outside.

7. Movement device as in claim 6, **characterized in that** each twisted blade with a helical development (41) is provided with an air inlet edge (45) that develops radially from the hub (42) and is part of the shank (43) and also with an air outlet edge (46) with an inclined cut shape that is part of the blade body (44) and is configured to determine a diversion of stream of air at exit, directing it diagonally downward toward the containing flange (25) and toward the air outlet apertures (30).

8. Movement device as in claim 7, **characterized in that** the air outlet edge (46) with an inclined cut shape is formed by a segment with an essentially circumferential development (47) and by an inclined cut segment (48).

9. Movement device as in any of the claims from 1 to 4, **characterized in that** said rotating suction member (36) includes a Coanda effect fan.

10. Movement device as in any claims hereinbefore, **characterized in that** said exit channel (25a) is a siphon shape.

11. Movement device as in any of the claims from 1 to 10, **characterized in that** said suction device (27) is configured to convey the air exiting from said one or more air outlet apertures (30) in a direction parallel to said axis (Y) and/or transversely with respect to said axis (Y), through said exit channel (25a).

12. Movement device as in any of the claims from 1 to 11 **characterized in that** said support structure (13) is provided with stiffening and support elements (33) which support said drive body (18), said stiffening and support elements (33) being disposed to achieve overall a radial or grid shape or reticular structure which at least partly defines said one or more lower apertures (30).

## Patentansprüche

1. Bewegungsvorrichtung für eine Kühlflüssigkeit, umfassend, angeordnet entlang einer gemeinsamen Achse (Y) :
- eine Antriebsanordnung (11), die mit mindestens einem Antriebskörper (18) und einer Stützstruktur (13) des Antriebskörpers (18) bereitgestellt ist;
- ein Bewegungselement (16) zum Bewegen der Kühlflüssigkeit, das durch die Antriebsanordnung (11) antreibbar ist;
- eine Kühleinheit (12), die zum Kühlen der Antriebsanordnung (11) ausgelegt ist und entlang der Achse (Y) zwischen der Antriebsanordnung (11) und dem Bewegungselement (16) angeordnet ist;
wobei die Stützstruktur (13) eine oder mehrere obere und/oder seitliche Lufteintrittsöffnungen (29a, 29b, 29c), die in einem oberen Abschnitt (13b) der Stützstruktur (13) ausgebildet sind, und eine oder mehrere seitliche oder untere Luftaustrittsöffnungen (30), die in einem unteren Abschnitt (13a) der Stützstruktur (13) nahe der Kühleinheit (12) ausgebildet sind, umfasst, um insgesamt einen oder mehrere Kühlluft-Kanäle durch die Stützstruktur (13) hindurch und in direktem Kontakt mit dem Antriebskörper (18) zu definieren,
wobei die Kühleinheit (12) eine Saugvorrichtung (27) umfasst, die an der einen oder den mehreren Luftaustrittsöffnung (30) angeordnet ist und dafür ausgelegt ist, das Ansaugen von Luft durch die Antriebsanordnung (18) hindurch, entlang des einen oder der mehreren Kanäle, von der einen oder den mehreren Lufteintrittsöffnungen (29a, 29b, 29c) in Richtung der einen oder mehreren Luftaustrittsöffnungen (30) zu bewirken,
wobei die Kühleinheit (12) einen unteren Halteflansch (25) umfasst, der die Saugvorrichtung (27) enthält, wobei der Halteflansch (25) mit einem Umfangsrand (23) bereitgestellt ist, der die Luftaustrittsöffnungen (30) der Stützstruktur (13) in einer Richtung radial zur Achse (Y) abdeckt, wobei der Halteflansch (25) mit einer inneren Vertiefung (26) bereitgestellt ist, die in Richtung der einen oder mehreren Luftaustrittsöffnungen (30) weist, wobei die Saugvorrichtung (27) in der inneren Vertiefung (26) platziert ist, und
wobei die Saugvorrichtung (27) ein rotierendes Saugelement (36) umfasst, das dafür ausgelegt ist, die angesaugte Luft diagonal nach unten zum Halteflansch (25) und zu den Luftaustrittsöffnungen (30) zu leiten; wobei der Halteflansch (25) dafür ausgelegt ist, eine seitliche und untere Barriere für die Stützstruktur (13) zu erwirken, welche die Antriebsanordnung (18) vor von unten oder seitlich aufsteigender Feuchtigkeit schützt;
wobei der Halteflansch (25), wenn in einer Richtung radial zur Achse (Y) betrachtet, den unteren Abschnitt (13a) der Stützstruktur (13) überlappt, wodurch ein Austrittskanal (25a) mit einer ringförmigen Form definiert wird, der die Luftaustrittsöffnungen (30) mit externen Öffnungen (39) verbindet;
**dadurch gekennzeichnet, dass** der Austrittskanal (25a) eine axialsymmetrische Erstreckung um die Achse (Y) herum aufweist und sich vorwiegend in einer Richtung quer zu einer Basisauflagefläche des Halteflanschs (25), also in vertikaler Richtung, parallel zu der Achse (Y), erstreckt.

2. Bewegungsvorrichtung nach Anspruch 1, **dadurch gekennzeichnet, dass** die eine oder mehreren Lufteintrittsöffnungen (29a, 29b, 29c) an einer von dem Antriebskörper (18) beabstandeten Position bereitgestellt sind, die in Bezug auf den Antriebskörper (18) in einer der Position der Kühleinheit (12) entgegengesetzten Richtung erhöht ist.

3. Bewegungsvorrichtung nach Anspruch 1 oder 2, **dadurch gekennzeichnet, dass** die eine oder die mehreren Lufteintrittsöffnungen (29a, 29b, 29c) in einer länglichen Form ausgebildet sind.

4. Bewegungsvorrichtung nach Anspruch 1, 2 oder 3, **dadurch gekennzeichnet, dass** die Stützstruktur (13) an der Seite mindestens eine seitliche Aussparungsöffnung (24) aufweist, die zum Eintritt der Luft ins Innere der Stützstruktur (13) ausgelegt versenkt in der Stützstruktur (13) hergestellt ist, wobei mindestens eine der Lufteintrittsöffnungen (29a, 29b) benachbart zu der seitlichen Aussparung (24) bereitgestellt ist.

5. Bewegungsvorrichtung nach einem der Ansprüche 1 bis 4, **dadurch gekennzeichnet, dass** das rotierende Saugelement ein Sauggebläse (36) beinhaltet, das mit verdrehten Schaufeln mit einer helixförmigen Erstreckung (41) bereitgestellt ist.

6. Bewegungsvorrichtung nach Anspruch 5, **dadurch gekennzeichnet, dass** das Sauggebläse (36) eine zentrale Nabe (42) umfasst, von der sich die verdrehten Schaufeln mit einer helixförmigen Erstreckung (41) entfernen, wobei jede verdrehte Schaufel mit einer helixförmigen Erstreckung (41) einen Schaft (43), der mit der zentralen Nabe (42) verbunden ist, und einen verdrehten Schaufelkörper (44), der ein radial verdrehtes Profil (51) mit einer helixförmigen Erstreckung an der Außenseite aufweist, umfasst.

7. Bewegungsvorrichtung nach Anspruch 6, **dadurch gekennzeichnet, dass** jede verdrehte Schaufel mit einer helixförmigen Erstreckung (41) bereitgestellt ist mit einem Lufteintrittsrand (45), der sich von der Nabe (42) aus radial erstreckt und Teil des Schafts (43) ist, und außerdem mit einem Luftaustrittsrand (46) mit einer Schrägschnittform, der Teil des Schaufelkörpers (44) ist und dafür ausgelegt ist, eine Ablenkung des Luftstroms bei Austritt zu bestimmen und diesen diagonal nach unten in Richtung des Halteflanschs (25) und in Richtung der Luftaustrittsöffnungen (30) zu leiten.

8. Bewegungsvorrichtung nach Anspruch 7, **dadurch gekennzeichnet, dass** der Luftaustrittsrand (46) mit einer Schrägschnittform durch ein Segment mit einer im Wesentlichen umfangsmäßigen Erstreckung (47) und durch ein Schrägschnittsegment (48) gebildet wird.

9. Bewegungsvorrichtung nach einem der Ansprüche 1 bis 4, **dadurch gekennzeichnet, dass** das rotierende Saugelement (36) ein Coanda-Effekt-Gebläse beinhaltet.

10. Bewegungsvorrichtung nach einem der vorhergehenden Ansprüche, **dadurch gekennzeichnet, dass** der Austrittskanal (25a) eine Siphonform aufweist.

11. Bewegungsvorrichtung nach einem der Ansprüche 1 bis 10, **dadurch gekennzeichnet, dass** die Saugvorrichtung (27) dafür ausgelegt ist, die Luft, die aus der einen oder den mehreren Luftaustrittsöffnungen (30) in einer Richtung parallel zur Achse (Y) und/oder quer zur Achse (Y) austritt, durch den Austrittskanal (25a) zu leiten.

12. Bewegungsvorrichtung nach einem der Ansprüche 1 bis 11, **dadurch gekennzeichnet, dass** die Stützstruktur (13) mit Versteifungs- und Stützelementen (33) bereitgestellt ist, die den Antriebskörper (18) stützen, wobei die Versteifungs- und Stützelemente (33) so angeordnet sind, dass sie insgesamt eine radiale oder gitterförmige Form oder eine netzartige Struktur erzielen, die die eine oder die mehreren unteren Öffnungen (30) definiert.

## Revendications

1. Dispositif de déplacement d'un liquide de refroidissement, comprenant, disposés le long d'un axe commun (Y) :
- un ensemble d'entraînement (11), pourvu d'au moins un corps d'entraînement (18) et d'une structure de support (13) dudit corps d'entraînement (18) ;
- un élément de déplacement (16) pour déplacer ledit liquide de refroidissement, pouvant être entraîné par ledit ensemble d'entraînement (11) ;
- une unité de refroidissement (12) configurée pour refroidir l'ensemble d'entraînement (11) et disposée le long dudit axe (Y), en un emplacement intermédiaire entre ledit ensemble d'entraînement (11) et ledit élément de déplacement (16) ;
dans lequel ladite structure de support (13) comprend une ou plusieurs ouvertures d'entrée d'air supérieure et/ou latérale (29a, 29b, 29c) réalisées dans une partie supérieure (13b) de la structure de support (13) et une ou plusieurs ouvertures de sortie d'air latérales ou inférieures (30), réalisées dans une partie inférieure (13a) de la structure de support (13), à proximité de l'unité de refroidissement (12), pour définir globalement un ou plusieurs passages d'air de refroidissement à travers ladite structure de support (13) et en contact direct avec ledit corps d'entraînement (18), dans lequel
ladite unité de refroidissement (12) comprend un dispositif d'aspiration (27), disposé au niveau desdites une ou plusieurs ouvertures de sortie d'air (30) et configuré pour provoquer l'aspiration d'air à travers ledit ensemble d'entraînement (18) le long desdits un ou plusieurs passages depuis lesdites une ou plusieurs ouvertures d'entrée d'air (29a, 29b, 29c) vers lesdites une ou plusieurs ouvertures de sortie d'air (30), dans lequel
ladite unité de refroidissement (12) comprend une bride de retenue inférieure (25) qui retient ledit dispositif d'aspiration (27), ladite bride de retenue (25) étant pourvue d'un bord périphérique (23) qui recouvre, dans une direction radiale par rapport à l'axe (Y), lesdites ouvertures de sortie d'air (30) de ladite structure de support (13), ladite bride de retenue (25) étant munie d'un siège interne (26), tourné vers lesdites une ou plusieurs ouvertures de sortie d'air (30), ledit dispositif d'aspiration (27) étant positionné dans ledit siège interne (26), et dans lequel ledit dispositif d'aspiration (27) comprend un élément d'aspiration rotatif (36) configuré pour diriger l'air pris en diagonale vers le bas en direction de la bride de retenue (25) et des ouvertures de sortie d'air (30) ;
dans lequel ladite bride de retenue (25) est configurée pour obtenir une barrière latérale et inférieure pour la structure de support (13), en protégeant l'ensemble d'entraînement (18) de l'humidité provenant de dessous ou latéralement ;
dans lequel, en regardant dans une direction radiale à l'axe (Y), ladite bride de retenue (25) chevauche la partie inférieure (13a) de la structure de support (13), en définissant un canal de sortie (25a) de forme annulaire qui relie les ouvertures de sortie d'air (30) aux ouvertures externes (39) ;
**caractérisé en ce que** ledit canal de sortie (25a) a un développement axialement symétrique autour de l'axe (Y) et se développe principalement dans une direction transversale à un plan de pose de base de la bride de retenue (25), donc une direction verticale, parallèle à l'axe (Y).

2. Dispositif de déplacement selon la revendication 1, **caractérisé en ce que** lesdites une ou plusieurs ouvertures d'entrée d'air (29a, 29b, 29c) sont prévues dans une position éloignée dudit corps d'entraînement (18), surélevée dans une direction opposée à la position de l'unité de refroidissement (12) par rapport audit corps d'entraînement (18).

3. Dispositif de déplacement selon la revendication 1 ou 2, **caractérisé en ce que** lesdites une ou plusieurs ouvertures d'entrée d'air (29a, 29b, 29c) sont mises en forme avec une forme allongée.

4. Dispositif de déplacement selon la revendication 1, 2 ou 3, **caractérisé en ce que** ladite structure de support (13) présente latéralement au moins une ouverture de poche latérale (24), configurée pour l'entrée de l'air à l'intérieur de la structure de support (13) et réalisée en retrait dans ladite structure de support (13), au moins une desdites ouvertures d'entrée d'air (29a, 29b) étant prévue adjacente à ladite poche latérale (24).

5. Dispositif de déplacement selon l'une quelconque des revendications 1 à 4, **caractérisé en ce que** ledit élément d'aspiration rotatif comprend un ventilateur d'aspiration (36) muni de pales torsadées à développement hélicoïdal (41).

6. Dispositif de déplacement selon la revendication 5, **caractérisé en ce que** le ventilateur d'aspiration (36) comprend un moyeu central (42) duquel partent les pales torsadées à développement hélicoïdal (41), chaque pale torsadée à développement hélicoïdal (41) comprenant une tige (43) se raccordant au moyeu central (42) et un corps de pale torsadée (44) qui présente radialement un profil torsadé (51) avec un développement hélicoïdal à l'extérieur.

7. Dispositif de déplacement selon la revendication 6, **caractérisé en ce que** chaque pale torsadée à développement hélicoïdal (41) est munie d'un bord d'entrée d'air (45) qui se développe radialement à partir du moyeu (42) et forme une partie de la tige (43), et également d'un bord de sortie d'air (46) avec une forme d'entaille inclinée qui forme une partie du corps de pale (44) et est configuré pour déterminer un détournement de flux d'air au niveau de la sortie, en le dirigeant en diagonale vers le bas (25) et vers les ouvertures de sortie d'air (30).

8. Dispositif de déplacement selon la revendication 7, **caractérisé en ce que** le bord de sortie d'air (46) avec une forme d'entaille inclinée est formé par un segment à développement essentiellement circonférentiel (47) et par un segment d'entaille inclinée (48).

9. Dispositif de déplacement selon l'une quelconque des revendications 1 à 4, **caractérisé en ce que**
ledit élément d'aspiration rotatif (36) comprend un ventilateur à effet Coanda.

10. Dispositif de déplacement selon l'une quelconque des revendications précédentes, **caractérisé en ce que** ledit canal de sortie (25a) est une forme de siphon.

11. Dispositif de déplacement selon l'une quelconque des revendications 1 à 10, **caractérisé en ce que** ledit dispositif d'aspiration (27) est configuré pour acheminer l'air sortant desdites une ou plusieurs ouvertures de sortie d'air (30) dans une direction parallèle audit axe (Y) et/ou transversalement par rapport audit axe (Y), à travers ledit canal de sortie (25a).

12. Dispositif de déplacement selon l'une quelconque des revendications 1 à 11, **caractérisé en ce que** ladite structure de support (13) est munie d'éléments de raidissement et de support (33) qui supportent ledit corps d'entraînement (18), lesdits éléments de raidissement et de support (33) étant disposé pour obtenir globalement une forme radiale ou en grille ou une structure réticulaire qui définit au moins partiellement lesdites une ou plusieurs ouvertures inférieures (30).
